# EUROPEAN PATENT APPLICATION

(11) **EP 3 492 275 A1**
(43) Date of publication of application: **05.06.2019**
(21) Application number: 17204400.0
(22) Date of filing: 29.11.2017
(51) Int. Cl.: B60B 1/00, B60B 27/02, B60B 35/14, B60B 27/00, B60B 27/04

(54) **A WHEEL HUB WITH DISENGAGABLE BRAKE SYSTEM COMPONENTS**

(71) Applicant: DNDR BVBA, 1790 Affligem (BE)
(72) Inventor: Leenen, Philip, 1790 Affligem (BE)
(74) Representative: IP HILLS NV

(57) **Abstract**

A wheel hub for a vehicle comprising:
- a main hub part (101, 101', 101") supporting wheel components (110);
- a first additional hub part (102, 102') supporting brake system components (120);
- a first coupling (104, 104', 104") between the main hub part (101, 101', 101") and the first additional hub part (102, 102');
- a first hub part support (106), fixed non-rotating to the vehicle and adapted to rotatably support the first additional hub part (102, 102'); and
- a through-axle (108) with tensioning lever (183) for maintaining the main hub part (101, 101', 101") and the first additional hub part (102, 102') in an engaging position jointly forming a synchronous rotating hub, and releasing the main hub part (101, 101', 101") from the first additional hub part (102, 102') in a disengaging position thereby enabling to remove the main hub part (101, 101', 101") without removal of the first additional hub part (102, 102').

## Description

### Field of the Invention

The present invention generally relates to a wheel hub for a vehicle, for instance a bicycle, a race bike, an electric bike, a speed-pedelec, a motorcycle, a three-wheel bike or the like, that makes use of one or more brake discs to slow down the wheel. More particularly, the invention concerns a wheel hub that provides more comfort to when a wheel or tire of a vehicle equipped with brake discs needs to be replaced.

### Background of the Invention

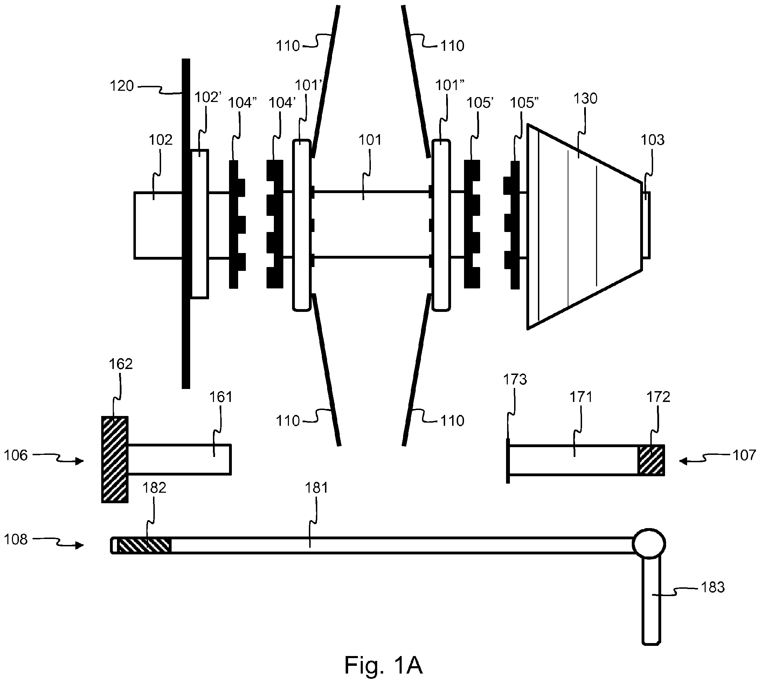

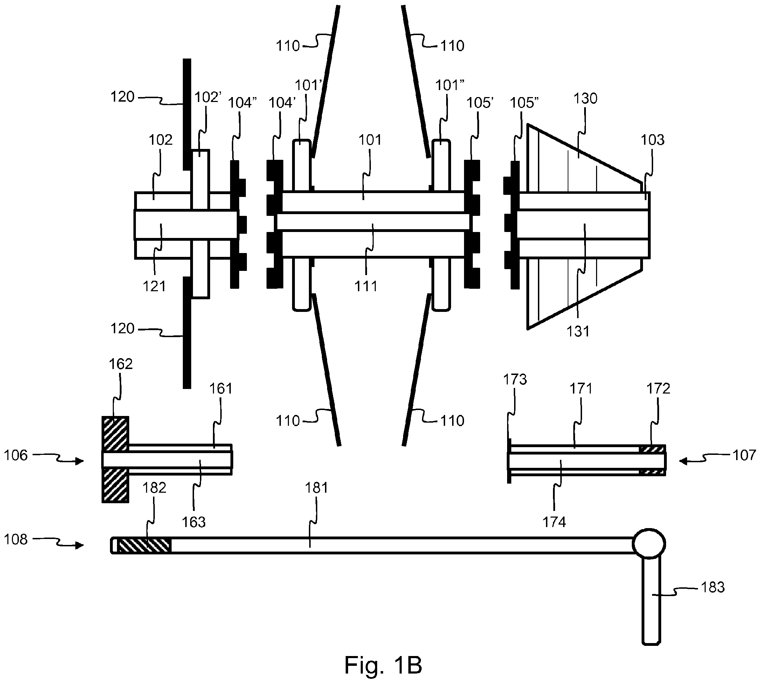

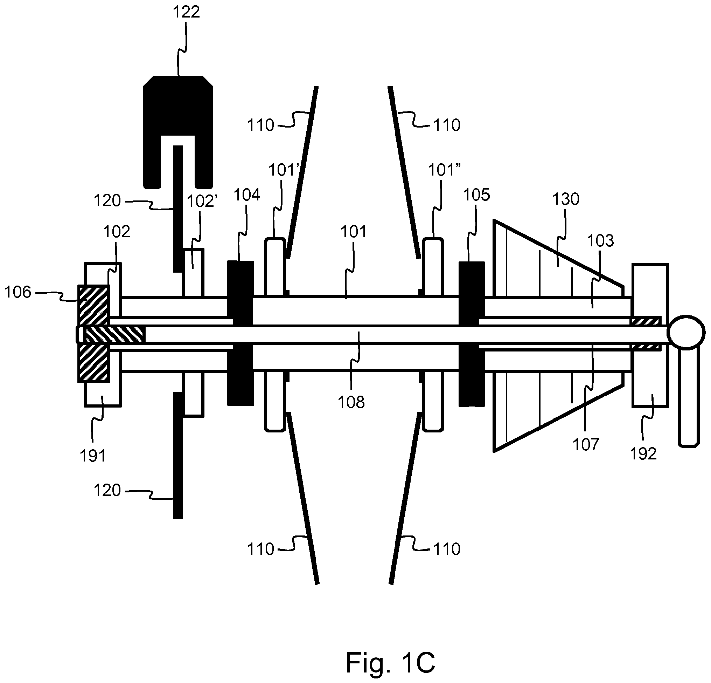

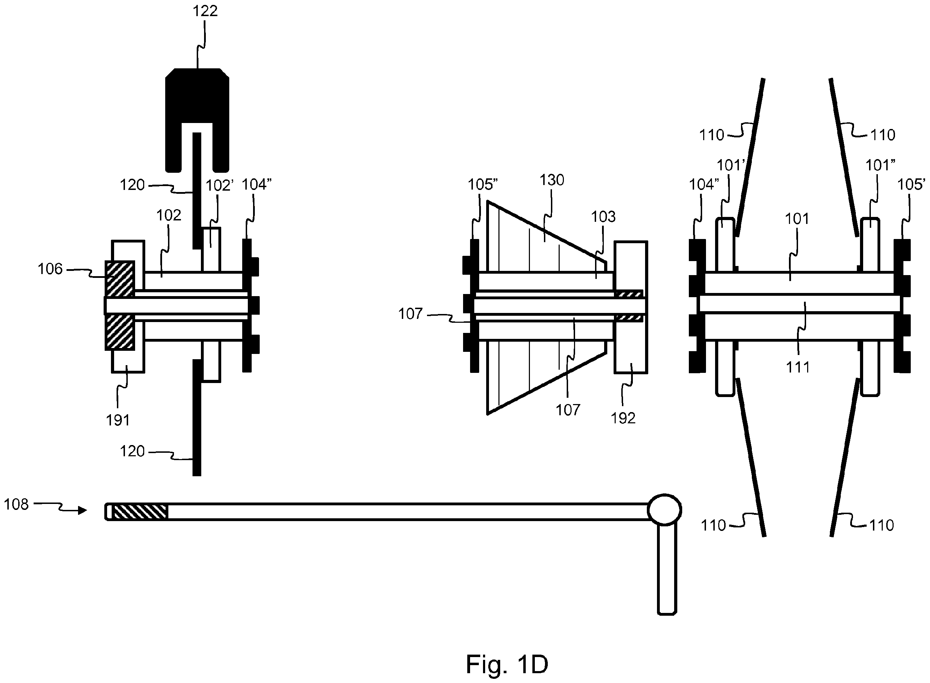

European Patent Application EP 2 752 773 entitled "Moyeu pour la Roue Avant ou Arrière d'un Cycle et Dispositif d'Accouplement entre tel Moyeu et un Disque de Freinage" describes a hub (2 in Fig. 1) for a front wheel or back wheel of a bicycle that is slowed down by a disc brake (8 in Fig. 1). The disc brake is mounted onto the hub and kept in place through a dedicated shoulder (14 in Fig. 1) of the hub and a dedicated nut (12 in Fig. 1).

Known hubs for wheels that are equipped with disc brakes are disadvantageous for several reasons that are related to the replacement of wheels or tires. Wheels or tires are replaced in case of a punctured tire, in case the tire or wheel needs to be adapted to varying conditions such as changing weather or surface conditions, when the same bike is used on bicycle rolls for training, etc.

Replacing a wheel, replacing a tire or fixing a punctured tire requires removal of the brake disc rotor. This involves the risk for oil leaks, for instance as a result of letting the brake callipers come out too far. This risk for oil leaks also exists when a bicycle with disc brakes is transported without the wheels in place.

For a bicycle with disk brakes, the replacement wheel needs its own disc rotor. A consequence thereof is that the brake calliper may have to be adjusted each time the wheel is replaced. In particular during a race this is not desirable because wheels may be swapped frequently during a race, for instance to adjust the tires to the changing weather conditions or varying surface conditions. During a race, wheels must be replaceable quickly.

A further drawback of existing hubs is that race bikes with disc brakes cannot get a replacement wheel from anyone else because the disc rotor of the replacement wheel may rub.

Yet another disadvantage of existing hubs is that front wheels differ from rear wheels. As a consequence, replacement front wheels and replacement rear wheels have to be available during a race, and this for each race bike in the race. The selection of the appropriate wheel by a technician and the replacement of the wheel consequently remains a stressful and error-prone event for a race team.

Replacing a rear wheel may be a clumsy task due to the presence of the drive train components, for instance the gear body and cassette. If a race bike receives a new rear wheel during a race, the cassette on the rear wheel may have cog-wheels that differ from the cogs on the removed wheel. The chain must be aligned again with the correct cog wheel which may be difficult, and which may result in greasy hands for the technician or biker replacing the wheel.

Some or all of the above disadvantages also appear when a wheel with disk brakes has to be replaced in a belt-drive bike or in a single-speed bike that is not equipped with a chain tensioner.

It is an objective of the present invention to resolve one or more of the above-mentioned shortcomings of existing wheel hubs for vehicles with disc brakes. More particularly, it is an objective to disclose a wheel hub for a vehicle with disc brakes which provides more comfort when replacing the wheel by enabling fast replacement of a wheel without risk for oil leaks, without risk for wrong positioning of the disc rotor resulting in rubbing, and possibly with the ability to exchange wheels between different bikes and/or to exchange front and rear wheels.

### Summary of the Invention

According to the present invention, one or more of the above-identified objectives by the wheel hub for a vehicle defined by claim 1, comprising:
- a main hub part adapted to support wheel components;
- a first additional hub part adapted to support brake system components comprising a brake disc;
- a first coupling between the main hub part and the first additional hub part adapted to engage the main hub part with the first additional hub part in an engaging position and to disengage the main hub part from the first additional hub part in a disengaging position;
- a first hub part support adapted to be fixed non-rotating to the vehicle and adapted to rotatably support the first additional hub part; and
- a through-axle with tensioning lever adapted in the engaging position to maintain the main hub part and the first additional hub part in position jointly forming a synchronous rotating hub, and adapted in the disengaging position to release the main hub part from the first additional hub part thereby enabling to remove the main hub part without removal of the first additional hub part.

Thus, the invention resides in separating the main part of the hub that supports at least the spokes and rim of the wheel from an additional hub part that supports at least the rotor of a disk brake. The main hub part and additional hub part can be coupled together to create a synchronous rotating hub in a so called engaging position. When engaging, a through-axle holds the main hub part and additional hub part in position vis-à-vis the vehicle's frame or fork. by screwing the through-axle into the vehicle's frame or fork, fixation of the hub parts vis-à-vis each other and fixation of the hub parts vis-à-vis the frame or fork is realised. The through-axle further has a tensioning lever that enables to increase the fixation force and stiffness of the coupling between hub parts and vehicle frame/fork. The coupling between the main hub part and additional hub part may for instance be a mechanical coupling, a friction-based coupling, a magnetic coupling, a pneumatic coupling or hydraulic coupling. The main hub part is decoupled from the additional hub part in a so called disengaging position. In this disengaging position, the additional hub part preferably is held in place by a hub part support that is fixed non-rotating to the vehicle, for instance integrated with or screwed into a fork leg of a bicycle frame, and which rotatably supports the additional hub part, for instance through bearings. This way, the main hub part supporting the wheel can be removed while the additional hub part supporting the brake disc is kept in place. The wheel in other words can be removed and replaced easily without displacement of the brake disc and consequently without risk for oil leaks or rubbing disc brakes as a result of misalignment or even worse installation of a different wheel with different rotor.

In embodiments of the wheel hub according to the present invention, defined by claim 2, the first additional hub part is adapted to support drive train components.

By adapting the first additional hub part such that it supports drive train components, for instance the gear body and cassette, in addition to the disc brake rotor, removing or replacing the rear wheel of a bicycle becomes even less cumbersome. The replacement wheel no longer needs to have its own cassette, the risk that the replacement wheel has different cogs and/or the complexity of aligning the chain with the correct cog are avoided. Furthermore, the main hub part of the rear wheel of a bicycle can now be made such that it only contains wheel components and consequently becomes interchangeable with the front wheel of the bicycle. During a race, a cycling team consequently no longer has to transport replacement front wheels and replacement rear wheels for each bike in the race.

In embodiments of the wheel hub according to the present invention, defined by claim 3, the first additional hub part is adapted to support brake modulation system components.

Indeed, for vehicles equipped with a brake modulation system, the first additional part of the wheel hub is preferably designed such that it supports the brake modulation system components in addition to the disc brake rotor and possibly in addition to the drive train components. This way, removing or replacing a wheel does not affect the brake modulation system. The main hub part supporting components of the wheel or components of the replacement wheel does not have to support components of the brake modulation system further reducing the risk for incompatibilities when replacing a wheel.

In embodiments of the wheel hub according to the present invention, defined by claim 4, the additional hub part is adapted to support speedometer components.

Hence, in case the vehicle is equipped with a speedometer, the first additional hub part is preferably designed such that it supports speedometer components that need to be mounted non-rotating near wheel components, like for instance an electromagnet, in addition to the disc brake rotor and possibly in addition to drive train components and/or brake modulation system components. This way, removing or replacing a wheel does not affect the speedometer. The main hub part supporting components of the wheel or components of the replacement wheel does not have to support speedometer components further reducing the risk for incompatibilities when replacing a wheel.

In embodiments of the wheel hub according to the present invention, defined by claim 5, the first hub part support comprises a retention component to retain the first additional hub part in place when the main hub part is removed in the disengaging position.

Indeed, the outer end of the first hub part support near the first coupling preferably is designed to have a retention element, for instance a small flange that retains the components supported by the first additional hub part, i.e. the disk brake rotor but possibly also the drive train components, the brake modulation system components and/or the speedometer components, in place when the main hub part supporting the wheel components is decoupled from the first additional hub part and removed for service, transport or replacement.

In embodiments of the wheel hub according to the present invention, defined by claim 6, the first hub part support is integrated with a vehicle frame or fork.

Indeed, the first hub part support must be attached fixedly to the vehicle frame, for instance to a leg of the bicycle fork. The first hub part support thereto may be provided with screw thread enabling to screw the first hub part support into an opening foreseen on the fork leg. Alternatively, the first hub part support may be integral part of the vehicle frame or fork which further reduces the risk that the first additional hub part and the components supported thereby are loosened during a ride.

Embodiments of the wheel hub according to the present invention, defined by claim 7, further comprise:
- a second additional hub part;
- a second coupling between the main hub part and the second additional hub part adapted to engage the main hub part with the second additional hub part in the engaging position and to disengage the main hub part from the second additional hub part in the disengaging position; and
- a second hub part support adapted to be fixed non-rotating to the vehicle and adapted to rotatably support the second additional hub part; and wherein
- the through-axle with tensioning lever is further adapted in the engaging position to maintain the main hub part with the first additional hub part and the second additional hub part in position jointly forming a synchronous rotating hub, and adapted in the disengaging position to release the main hub part from the first additional hub part and the second additional hub part thereby enabling to remove the main hub part without removal of the first additional hub part and without removal of the second additional hub part.

Thus, advantageous embodiments of the wheel hub according to the present invention comprise three parts: a main hub part supporting wheel components, for instance the spokes and rim, a first additional hub part at least supporting the rotor of a disc brake, and a second additional hub part supporting no components or further components like for instance drive train components, brake modulation system components, speedometer components, etc. The first additional hub part and the second additional hub part engage with the main hub part at opposite sides of the main hub part. Thereto a first coupling is foreseen between the main hub part and the first additional hub part, and a second coupling is foreseen between the opposite end of the main hub part and the second additional hub part. The first and second coupling preferably are of the same nature, and may either be mechanical couplings, frictional couplings, magnetic couplings, pneumatic couplings, hydraulic couplings, etc. The second additional hub part enables to design the rear wheel hub such that drive train components and the disc brake rotor need not be supported by a single hub part, which reduces for instance the complexity of mounting the disk brake calliper on the fork leg of the vehicle. A three-part front wheel hub, even if the front wheel has no drive train components that are preferably separated from the disk brake rotor, on the other hand brings the advantage of increased compatibility with a three-part rear wheel hub, hence enabling to exchange a rear wheel and a front wheel because identical main hub parts may be used for the front wheel and rear wheel.

In embodiments of the wheel hub according to the present invention, defined by claim 8, the second additional hub part is adapted to support drive train components.

Indeed, as mentioned above, the second additional hub part may be designed to support drive train components like the gear body and cassette. This way, the drive train components can be decoupled from the wheel components and retained in place, without being supported by the first additional hub part that supports the disc brake rotor and therefore must be aligned with the disc brake calliper to avoid rubbing. When removing the main hub part supporting the wheel components for transport, service or replacement, the first additional hub part shall retain the disk brake rotor in place whereas the second additional hub part shall retain the drive train components in place. The respective dimensions of the first coupling and the second coupling, for instance the diameters of these couplings, may be identical or may be different in variant embodiments of the wheel hub according to the invention. The through-axle with tensioning lever must be adapted in length to engage the main hub part, first additional hub part and second additional hub part in the engaging position to jointly form a single rotating hub system. In the disengaging position, the main hub part becomes decoupled from the first additional hub part and the second additional hub part as a result of which the wheel components can be removed or replaced without impact on the disc brakes and without impact on the drive train.

In embodiments of the wheel hub according to the present invention, defined by claim 9, the second additional hub part is adapted to support brake modulation system components.

Indeed, for vehicles equipped with a brake modulation system, the second additional part of the wheel hub may be designed such that it supports the brake modulation system components, possibly in addition to the drive train components in case of a rear wheel hub. This way, removing or replacing a wheel does not affect the brake modulation system. The main hub part supporting components of the wheel or components of the replacement wheel does not have to support components of the brake modulation system further reducing the risk for incompatibilities when replacing a wheel.

In embodiments of the wheel hub according the present invention, defined by claim 10, the second additional hub part is adapted to support speedometer components.

Hence, in case the vehicle is equipped with a speedometer, the second additional hub part may be designed such that it supports speedometer components that need to be mounted non-rotating near wheel components, like for instance an electromagnet, possibly in addition to drive train components for a rear wheel and/or in addition to brake modulation system components. This way, removing or replacing a wheel does not affect the speedometer. The main hub part supporting components of the wheel or components of the replacement wheel does not have to support speedometer components further reducing the risk for incompatibilities when replacing a wheel.

In embodiments of the wheel hub according to the present invention, defined by claim 11, the second hub part support comprises a retention component to retain the second additional hub part in place when the main hub part is removed in the disengaging position.

Indeed, the outer end of the second hub part support near the second coupling preferably is designed to have a retention element, for instance a small flange that retains the components supported by the second additional hub part, i.e. the drive train components, the brake modulation system components and/or the speedometer components, in place when the main hub part supporting the wheel components is decoupled from the second additional hub part and removed for service, transport or replacement.

In embodiments of the wheel hub according to the present invention, defined by claim 12, the second hub part support is integrated with a vehicle frame.

Indeed, the second hub part support must be attached fixedly to the vehicle frame, for instance to a leg of the bicycle fork. The second hub part support thereto may be provided with screw thread on enabling to screw the second hub part support into an opening foreseen on the fork leg. Alternatively, the second hub part support may be integral part of the vehicle frame or fork which further reduces the risk that the second additional hub part and possibly the components supported thereby are loosened during a ride.

### Brief Description of the Drawings

Fig. 1A illustrates a first embodiment of the wheel hub according to the present invention for a rear wheel, comprising a main hub part 101, first additional hub part 102 and second additional hub part 103;
Fig. 1B represents a cross section of the first embodiment of Fig. 1A;
Fig. 1C represents of a cross section of the first embodiment of Fig. 1A, drawn in the engaging position;
Fig. 1D represents of a cross section of the first embodiment of Fig. 1A, drawn in the disengaging position;
Fig. 2 illustrates a second embodiment of the wheel hub according to the present invention for a rear wheel, comprising a main hub part 201 and first additional hub part 202;
Fig. 3 illustrates a third embodiment of the wheel hub according to the present invention for a front wheel, comprising a main hub part 301 and first additional hub part 302;
Fig. 4 illustrates a fourth embodiment of the wheel hub according to the present invention, for a front wheel, comprising a main hub part 401, first additional hub part 402 and second additional hub part 403;
Fig. 5A - 5G illustrate variant implementations of the main hub part in different embodiments of the wheel hub according to the present invention;
Fig. 6A - 6J illustrate variant implementations of the first additional hub part in different embodiments of the wheel hub according to the present invention;
Fig. 7A - 7E illustrate variant implementations of the second additional hub part in different embodiments of the wheel hub according to the present invention;
Fig. 8 illustrates a third additional hub part in embodiments of the wheel hub according to the present invention.

### Detailed Description of Embodiment(s)

Fig. 1A-1D illustrate a first embodiment of the wheel hub according to the invention. The wheel hub consists of three parts: a main part 101, 101', 101", a first additional part 102, 102', and a second additional part 103. The main hub part has a substantially cylindrical housing or shell 101 with two flanges 101', 101" that support the spokes 110 of a wheel. The first additional hub part also has a substantially cylindrical housing or shell 102 with a flange 102' supporting the rotor or disc 120 of a disc brake. The second additional hub part has a substantially cylindrical housing or shell 103 that supports the sprocket cassette 130 that forms part of the vehicle's drive train. In the cylindrical housings 101, 102 and 103, respective bearings enable the main and additional hub parts to rotate along an axis. The wheel hub illustrated by Fig. 1A-1D further contains a first mechanical coupling 104 that consists of a first part 104' integrated with or connected to the main hub part and a second part 104" integrated with or connected to the first additional hub part. The first part 104' and second part 104" of the first mechanical coupling respectively have teeth or other interlocking elements. Similarly, the wheel hub contains a second mechanical coupling 105 that consists of a first part 105' integrated with or connected to the main hub part and a second part 105" integrated with or connected to the second additional hub part. The first part 105' and the second part 105" of the second mechanical coupling also have teeth or other interlocking elements. The wheel hub of Fig. 1A - Fig. 1D further comprises a first hub part support 106 consisting of a hollow cylindrical housing 161 whose outer diameter within tolerances corresponds with the inner diameter of a cylindrical opening 121 in the first additional hub part. The first hub part support 106 in other words is designed and dimensioned to support the first additional hub part 102, 102' when inserted in the opening 121 thereof. The first hub part support 106 further has a connecting element 162 enabling to fixedly connect the first hub part support 106 to the vehicle frame, for instance by screwing it into a fork leg 191 of the vehicle frame. The wheel hub of Fig. 1A - Fig. 1D further also comprises a second hub part support 107 consisting of a hollow cylindrical housing 171 whose outer diameter within tolerances corresponds with the inner diameter of a cylindrical opening 131 in the second additional hub part. The second hub part support 107 in other words is designed and dimensioned to support the second additional hub part 103 when inserted in the opening 131 thereof. The second hub part support 107 further is provided with screw thread 172 at one end enabling that end to be fixedly connected to the vehicle frame, for instance a second fork leg 192 of the vehicle frame. The second hub part support 107 also has a retention element 173 at its opposite end, for instance a small flange whose diameter is dimensioned larger than the inner diameter of opening 131, such that the retention element 173 retains the second additional hub part 103 and consequently also the drive train components 130 supported thereby in place at any time. The wheel hub of Fig. 1A - Fig. 1D at last also comprises a through-axle 108. The through-axle 108 has a rod 181 whose outer diameter within tolerances corresponds with the inner diameter of opening 111 in the main hub part, opening 163 in the first hub part support 106, and opening 174 in the second hub part support 107. At one end of the rod 181, the through-axle 108 is provided with screw thread 182 enabling to fixedly screw the through-axle 108 in the connection element 162 of the first hub part support 106. At the opposite end of the rod 181, the through-axle 108 is provided with a tensioning lever 183. The through-axle is dimensioned in length such that the tensioning lever 183 enables the first coupling parts 104', 104" and the second coupling parts 105', 105" to interlock hence maintaining the main hub part, first additional hub part and second additional hub part in an engaging position wherein they jointly form a single hub system that synchronously rotates. The engaging position wherein the first coupling parts 104', 104" jointly form the first coupling 104, and wherein the second coupling parts 105', 105" jointly form the second coupling 105, is illustrated by Fig. 1C. The tensioning lever 183 further enables the first coupling parts 104', 104" and the second coupling parts 105', 105" to release hence bringing the main hub part, the first additional hub part and the second additional hub part in a disengaging position. In the disengaging position that is illustrated by Fig. 1D, the main hub part 101, 101', 101" supporting the wheel components 110 can be removed while the first additional hub part 102, 102' supporting the brake rotor 120 and the second additional hub part 103 supporting the drive train components 130 are retained in place, fixedly connected to the vehicle's frame 191, 192. The wheel hub illustrated by Fig. 1A - Fig. 1D brings the advantage that the wheel can be removed for transport, service or replacement without risk for oil leaks or rubbing as a result of misalignment between the disk brake rotor 120 and the brake calliper 122 that is typically mounted onto the fork leg 191.

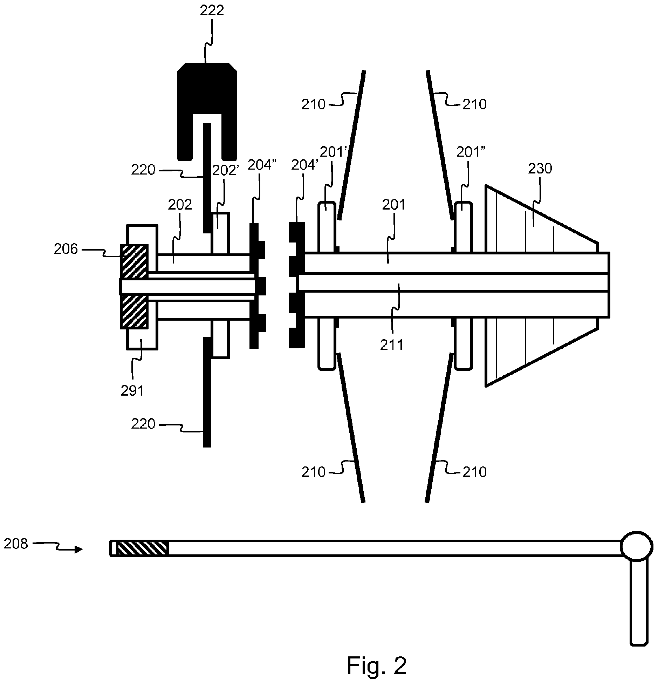

Fig. 2 illustrates a second embodiment of the wheel hub according to the invention, destined for a rear wheel. The wheel hub consists of two parts: a main part 201, 201', 201", and a first additional part 202, 202'. The main hub part has a substantially cylindrical housing or shell 201 with two flanges 201', 201" that support the spokes 210 of a wheel. The cylindrical housing 201 is dimensioned in length such that it also supports the sprocket cassette 130 that forms part of the vehicle's drive train. The first additional hub part also has a substantially cylindrical housing or shell 202 with a flange 202' supporting the rotor or disc 220 of a disc brake. In the cylindrical housings 201 and 202 respective bearings enable the main and additional hub part to rotate along an axis. The wheel hub illustrated by Fig. 2 further contains a first mechanical coupling that consists of a first part 204' integrated with or connected to the main hub part and a second part 204" integrated with or connected to the first additional hub part. The first part 204' and second part 204" of the first mechanical coupling respectively have teeth or other interlocking elements. The wheel hub of Fig. 2 further comprises a first hub part support 206 consisting of a hollow cylindrical housing whose outer diameter within tolerances corresponds with the inner diameter of a cylindrical opening in the first additional hub part. The first hub part support 206 in other words is designed and dimensioned to support the first additional hub part 202, 202' when inserted in the opening thereof. The first hub part support 206 further has a connecting element enabling to fixedly connect the first hub part support 206 to the vehicle frame, for instance by screwing it into a fork leg 291 of the vehicle frame. The wheel hub of Fig. 2 at last also comprises a through-axle 208. The through-axle 208 has a rod whose outer diameter within tolerances corresponds with the inner diameter of opening 211 in the main hub part, and an opening in the first hub part support 206. At one end of the rod, the through-axle 208 is provided with screw thread enabling to fixedly screw the through-axle 208 in the connection element of the first hub part support 206. At the opposite end of the rod, the through-axle 208 is provided with a tensioning lever. The through-axle is dimensioned in length such that the tensioning lever enables the first coupling parts 204', 204" to interlock hence maintaining the main hub part and first additional hub part in an engaging position wherein they jointly form a single hub system that synchronously rotates. The tensioning lever further enables the first coupling parts 204', 204" to release hence bringing the main hub part and the first additional hub part in a disengaging position. In the disengaging position, the main hub part 201, 201', 201" supporting the wheel components 210 and the drive train components 230 can be removed while the first additional hub part 202, 202' supporting the brake rotor 220 is retained in place, fixedly connected to the vehicle's frame 291. The wheel hub illustrated by Fig. 2 brings the advantage that the wheel and drive train sprocket 230 can be removed for transport, service or replacement without risk for oil leaks or rubbing as a result of misalignment between the disk brake rotor 220 and the brake calliper 222 that is typically mounted onto the fork leg 291. The wheel and drive train sprocket however still must be removed together, and the replacement wheel must also have a replacement sprocket. The wheel and the replacement wheel in the embodiment illustrated by Fig. 2 cannot be interchanged with a front wheel, but brings the advantage over the embodiment illustrated by Fig. 1A - Fig. 1D that the second coupling between hub parts is avoided.

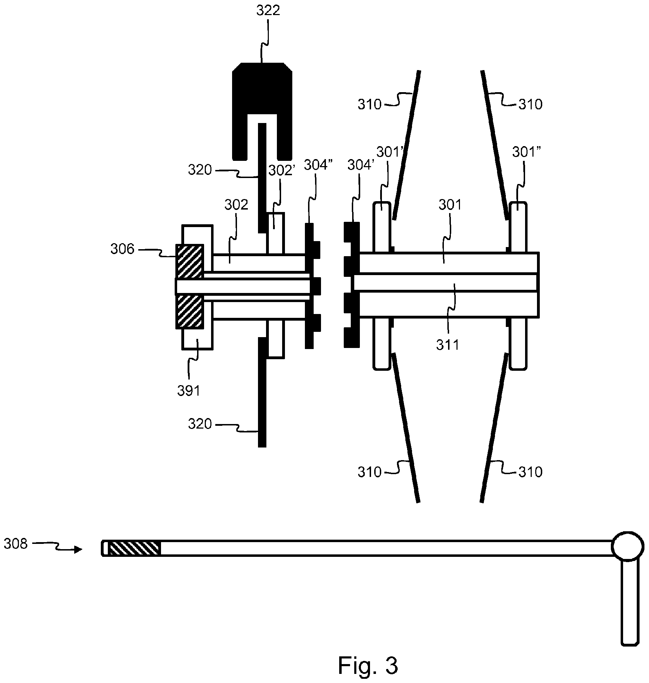

Fig. 3 illustrates a third embodiment of the wheel hub according to the invention, destined for a front wheel. The wheel hub consists of two parts: a main part 301, 301', 301", and a first additional part 302, 302'. The main hub part has a substantially cylindrical housing or shell 301 with two flanges 301', 301" that support the spokes 310 of a wheel. The first additional hub part also has a substantially cylindrical housing or shell 302 with a flange 302' supporting the rotor or disc 320 of a disc brake. In the cylindrical housings 301 and 302 respective bearings enable the main and additional hub part to rotate along an axis. The wheel hub illustrated by Fig. 3 further contains a first mechanical coupling that consists of a first part 304' integrated with or connected to the main hub part and a second part 304" integrated with or connected to the first additional hub part. The first part 304' and second part 304" of the first mechanical coupling respectively have teeth or other interlocking elements. The wheel hub of Fig. 3 further comprises a first hub part support 306 consisting of a hollow cylindrical housing whose outer diameter within tolerances corresponds with the inner diameter of a cylindrical opening in the first additional hub part. The first hub part support 306 in other words is designed and dimensioned to support the first additional hub part 302, 302' when inserted in the opening thereof. The first hub part support 306 further has a connecting element enabling to fixedly connect the first hub part support 306 to the vehicle frame, for instance by screwing it into a fork leg 391 of the vehicle frame. The wheel hub of Fig. 3 at last also comprises a through-axle 308. The through-axle 308 has a rod whose outer diameter within tolerances corresponds with the inner diameter of opening 311 in the main hub part, and an opening in the first hub part support 306. At one end of the rod, the through-axle 308 is provided with screw thread enabling to fixedly screw the through-axle 308 in the connection element of the first hub part support 306. At the opposite end of the rod, the through-axle 308 is provided with a tensioning lever. The through-axle 308 is dimensioned in length such that the tensioning lever enables the first coupling parts 304', 304" to interlock hence maintaining the main hub part and first additional hub part in an engaging position wherein they jointly form a single hub system that synchronously rotates. The tensioning lever further enables the first coupling parts 304', 304" to release hence bringing the main hub part and the first additional hub part in a disengaging position. In the disengaging position, the main hub part 301, 301', 301" supporting the wheel components 310 can be removed while the first additional hub part 302, 302' supporting the brake rotor 320 is retained in place, fixedly connected to the vehicle's frame 391. The wheel hub illustrated by Fig. 3 brings the advantage that the front wheel of for instance a bicycle can be removed for transport, service or replacement without risk for oil leaks or rubbing as a result of misalignment between the disk brake rotor 320 and the brake calliper 322 that is typically mounted onto the fork leg 391. The wheel and the replacement wheel in the embodiment illustrated by Fig. 3 cannot be interchanged with a rear wheel as illustrated for instance by Fig. 2.

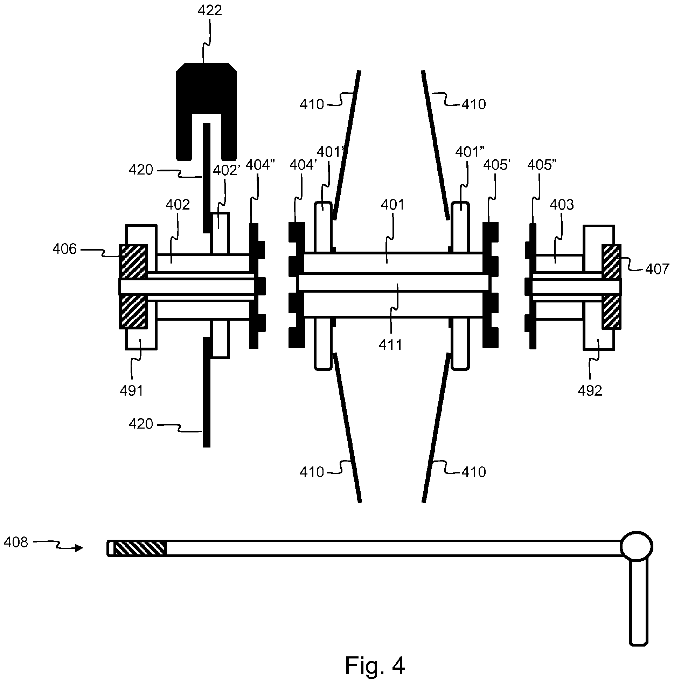

This problem is solved in Fig. 4 which illustrates an embodiment of the wheel hub according to the invention for a front wheel that enables to interchange front wheels (as depicted in Fig. 4) with rear wheels (as depicted for instance in Fig. 1A - Fig. 1D). The wheel hub drawn in Fig. 4 consists of three parts: a main part 401, 401', 401", a first additional part 402, 402', and a second additional part 403. The main hub part has a substantially cylindrical housing or shell 401 with two flanges 401', 401" that support the spokes 410 of a front wheel. The first additional hub part also has a substantially cylindrical housing or shell 402 with a flange 402' supporting the rotor or disc 420 of a disc brake. The second additional hub part also has a substantially cylindrical housing or shell 403. In the cylindrical housings 401, 402 and 403, respective bearings enable the main and additional hub parts to rotate along an axis. The wheel hub illustrated by Fig. 4 further contains a first mechanical coupling that consists of a first part 404' integrated with or connected to the main hub part and a second part 404" integrated with or connected to the first additional hub part. The first part 404' and second part 404" of the first mechanical coupling respectively have teeth or other interlocking elements. Similarly, the wheel hub contains a second mechanical coupling that consists of a first part 405' integrated with or connected to the main hub part and a second part 405" integrated with or connected to the second additional hub part. The first part 405' and the second part 405" of the second mechanical coupling also have teeth or other interlocking elements. The wheel hub of Fig. 4 further comprises a first hub part support 406 consisting of a hollow cylindrical housing whose outer diameter within tolerances corresponds with the inner diameter of a cylindrical opening in the first additional hub part. The first hub part support 406 in other words is designed and dimensioned to support the first additional hub part 402, 402' when inserted in the opening thereof. The first hub part support 406 further has a connecting element enabling to fixedly connect the first hub part support 406 to the vehicle frame, for instance by screwing it into a fork leg 491 of the vehicle frame. The wheel hub of Fig. 4 further also comprises a second hub part support 407 consisting of a hollow cylindrical housing whose outer diameter within tolerances corresponds with the inner diameter of a cylindrical opening in the second additional hub part. The second hub part support 407 in other words is designed and dimensioned to support the second additional hub part 403 when inserted in the opening thereof. The second hub part support further is provided with screw thread at one end enabling that end to be fixedly connected to the vehicle frame, for instance a second fork leg 492 of the vehicle frame. The wheel hub of Fig. 4 at last also comprises a through-axle 408. The through-axle 408 has a rod whose outer diameter within tolerances corresponds with the inner diameter of opening 411 in the main hub part, a cylindrical opening in the first hub part support 406, and a cylindrical opening in the second hub part support 407. At one end of the rod, the through-axle 408 is provided with screw thread enabling to fixedly screw the through-axle 408 in the connection element of the first hub part support 406. At the opposite end of the rod, the through-axle 408 is provided with a tensioning lever. The through-axle 408 is dimensioned in length such that the tensioning lever enables the first coupling parts 404', 404" and the second coupling parts 405', 405" to interlock hence maintaining the main hub part, first additional hub part and second additional hub part in an engaging position wherein they jointly form a single hub system that synchronously rotates. The tensioning lever further enables the first coupling parts 404', 404" and the second coupling parts 405', 405" to release hence bringing the main hub part, the first additional hub part and the second additional hub part in a disengaging position. In the disengaging position, the main hub part 401, 401', 401" supporting the front wheel components 410 can be removed while the first additional hub part 402, 402' supporting the brake rotor 420 is retained in place, fixedly connected to the vehicle's frame 491. The wheel hub illustrated by Fig. 4 brings the advantage that the wheel can be removed for transport, service or replacement without risk for oil leaks or rubbing as a result of misalignment between the disk brake rotor 420 and the brake calliper 422 that is typically mounted onto the fork leg 491.

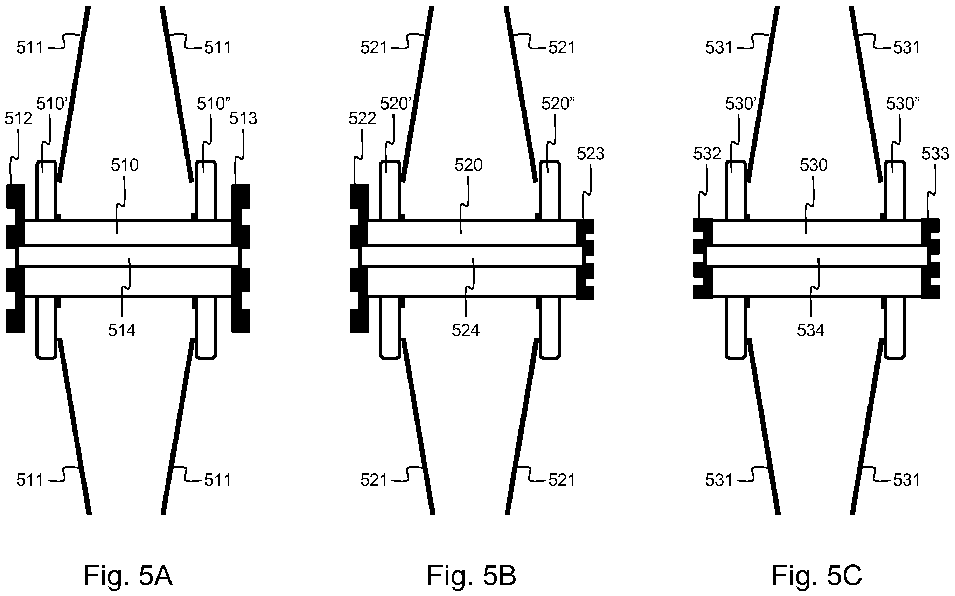

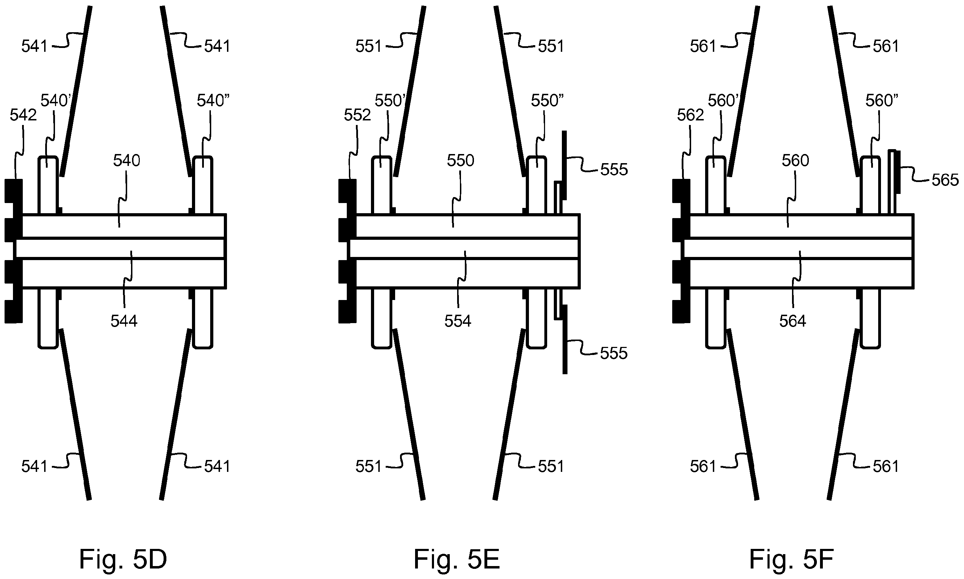

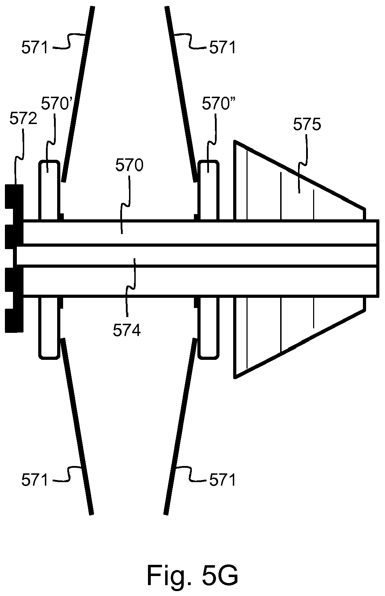

Fig. 5A - Fig. 5G show variant implementations of the main hub part in different embodiments of the wheel hub according to the present invention. Fig. 5A - Fig. 5C show variant implementations of the main hub part used in a 3-part hub system similar to Fig. 1A-1D (rear wheel) or Fig. 4 (front wheel). Fig. 5D - Fig. 5F show variant implementations of the main hub part used in a 2-part hub system similar to Fig. 3 (front wheel). Fig. 5G shows an implementation of the main hub part used in a 2-part hub system similar to Fig. 2 (rear wheel).

The main hub part drawn in Fig. 5A has a cylindrical housing 510 with internal cylindrical opening 514. In the cylindrical housing, bearings are provided. The main hub part further has flanges 510' and 510" that support spokes 511 of the wheel. At opposite ends of the cylindrical housing 510, a first coupling part 512 and a second coupling part 513 are foreseen, respectively enabling the main hub part to engage with a first additional hub part and a second additional hub part. The first coupling part 512 and second coupling part 513 are identical in size and have a diameter larger than the diameter of the cylindrical housing 510 of the main hub part.

The main hub part drawn in Fig. 5B has a cylindrical housing 520 with internal cylindrical opening 524. In the cylindrical housing 520, bearings are provided. The main hub part further has flanges 520' and 520" that support spokes 521 of the wheel. At opposite ends of the cylindrical housing 520, a first coupling part 522 and a second coupling part 523 are foreseen, respectively enabling the main hub part to engage with a first additional hub part and a second additional hub part. The first coupling part 522 has a diameter larger than the diameter of the cylindrical housing 520 of the main hub part. The second coupling part 523 is made smaller with a diameter identical to the diameter of the cylindrical housing 520. The small diameter coupling results in a more lightweight vehicle.

The main hub part drawn in Fig. 5C has a cylindrical housing 530 with internal cylindrical opening 534. In the cylindrical housing 530, bearings are provided. The main hub part further has flanges 530' and 530" that support spokes 531 of the wheel. At opposite ends of the cylindrical housing 530, a first coupling part 532 and a second coupling part 533 are foreseen, respectively enabling the main hub part to engage with a first additional hub part and a second additional hub part. The first coupling part 532 and the second coupling part 523 are both made smaller with a diameter identical to the diameter of the cylindrical housing 530. The small diameter couplings enable to further reduce the weight of the vehicle, which is important for instance for race bikes.

The main hub part drawn in Fig. 5D has a cylindrical housing 540 with internal cylindrical opening 544. In the cylindrical housing, bearings are provided. The main hub part further has flanges 540' and 540" that support spokes 541 of the wheel. At one end of the cylindrical housing 540, a coupling part 542 is foreseen, enabling the main hub part to engage with a single additional hub part to form a 2-part hub system. Although drawn with a large diameter, the skilled person will appreciate that a variant implementation of the main hub part drawn in Fig. 5D with small diameter coupling part could be contemplated as well.

The main hub part drawn in Fig. 5E has a cylindrical housing 550 with internal cylindrical opening 554. In the cylindrical housing, bearings are provided. The main hub part further has flanges 550' and 550" that support spokes 551 of the wheel, and an additional flange supporting brake modulation system components 555. At one end of the cylindrical housing 550, a coupling part 552 is foreseen, enabling the main hub part to engage with a single additional hub part to form a 2-part hub system. Although drawn with a large diameter, the skilled person will appreciate that a variant implementation of the main hub part drawn in Fig. 5E with small diameter coupling part could be contemplated as well.

The main hub part drawn in Fig. 5F has a cylindrical housing 560 with internal cylindrical opening 564. In the cylindrical housing, bearings are provided. The main hub part further has flanges 560' and 560" that support spokes 561 of the wheel, and an additional flange supporting speedometer components 565. At one end of the cylindrical housing 560, a coupling part 562 is foreseen, enabling the main hub part to engage with a single additional hub part to form a 2-part hub system. Although drawn with a large diameter, the skilled person will appreciate that a variant implementation of the main hub part drawn in Fig. 5F with small diameter coupling part could be contemplated as well.

The main hub part drawn in Fig. 5G has a cylindrical housing 570 with internal cylindrical opening 574. In the cylindrical housing, bearings are provided. The main hub part further has flanges 570' and 570" that support spokes 571 of the wheel, and the cylindrical housing 570 is dimensioned such that it also supports a drive train sprocket 575 in addition to the wheel components 571. At one end of the cylindrical housing 570, a coupling part 572 is foreseen, enabling the main hub part to engage with a single additional hub part to form a 2-part hub system. Although drawn with a large diameter, the skilled person will appreciate that a variant implementation of the main hub part drawn in Fig. 5G with small diameter coupling part could be contemplated as well.

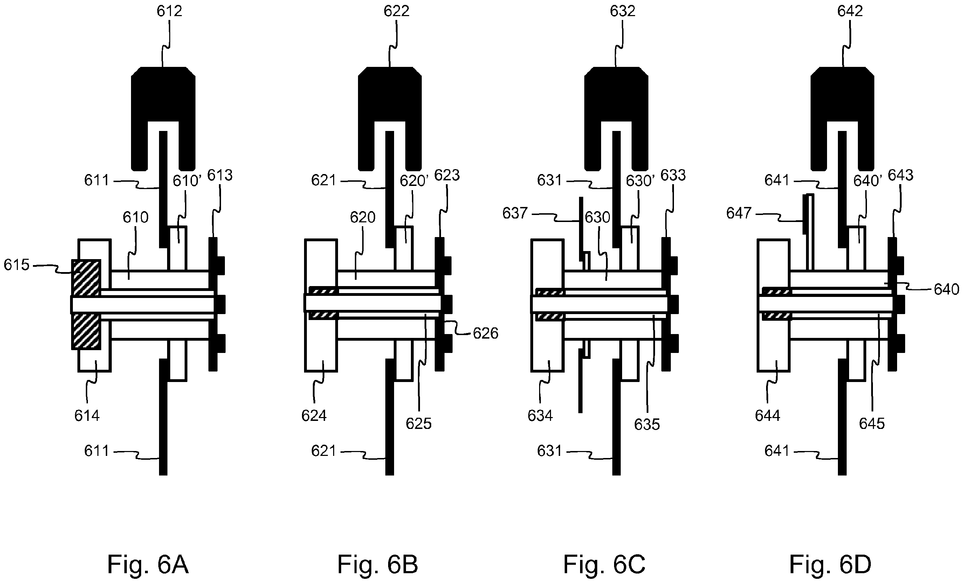

Fig. 6A - 6J illustrate variant implementations of the first additional hub part, supporting the disk brake rotor in different embodiments of the wheel hub according to the present invention.

The first additional hub part drawn in Fig. 6A has a cylindrical housing 610 with internal cylindrical opening. In the cylindrical opening a first hub part support 615 is inserted. This first hub part support 615 is fixedly screwed into a fork leg 614 of the vehicle. The first additional hub part further has a flange 610' supporting the disc brake rotor 611 that is aligned within the disc brake calliper 612. Attached to the cylindrical housing 610 is a coupling part 613 that enables the first additional hub part to engage with a main hub part to form a 2-part hub system or even a 3-part hub system when the main hub part is further coupled to a second additional hub part.

The first additional hub part drawn in Fig. 6B has a cylindrical housing 620 with internal cylindrical opening. In the cylindrical opening a first hub part support 625 is inserted. This first hub part support 625 is fixedly screwed into a fork leg 624 of the vehicle and has a retention element 626 for retaining the first additional hub part in place at any time. The first additional hub part further has a flange 620' supporting the disc brake rotor 621 that is aligned within the disc brake calliper 622. Attached to the cylindrical housing 620 is a coupling part 623 that enables the first additional hub part to engage with a main hub part to form a 2-part hub system or even a 3-part hub system when the main hub part is further coupled to a second additional hub part.

The first additional hub part drawn in Fig. 6C has a cylindrical housing 630 with internal cylindrical opening. In the cylindrical opening a first hub part support 635 is inserted. This first hub part support 635 is fixedly screwed into a fork leg 634 of the vehicle and has a retention element for retaining the first additional hub part in place at any time. The first additional hub part further has a flange 630' supporting the disc brake rotor 631 that is aligned within the disc brake calliper 632, and a smaller flange supporting brake modulation system components 637. Attached to the cylindrical housing 630 is a coupling part 633 that enables the first additional hub part to engage with a main hub part to form a 2-part hub system or even a 3-part hub system when the main hub part is further coupled to a second additional hub part.

The first additional hub part drawn in Fig. 6D has a cylindrical housing 640 with internal cylindrical opening. In the cylindrical opening a first hub part support 645 is inserted. This first hub part support 645 is fixedly screwed into a fork leg 644 of the vehicle and has a retention element for retaining the first additional hub part in place at any time. The first additional hub part further has a flange 640' supporting the disc brake rotor 641 that is aligned within the disc brake calliper 642, and a smaller flange supporting speedometer components 647. Attached to the cylindrical housing 640 is a coupling part 643 that enables the first additional hub part to engage with a main hub part to form a 2-part hub system or even a 3-part hub system when the main hub part is further coupled to a second additional hub part.

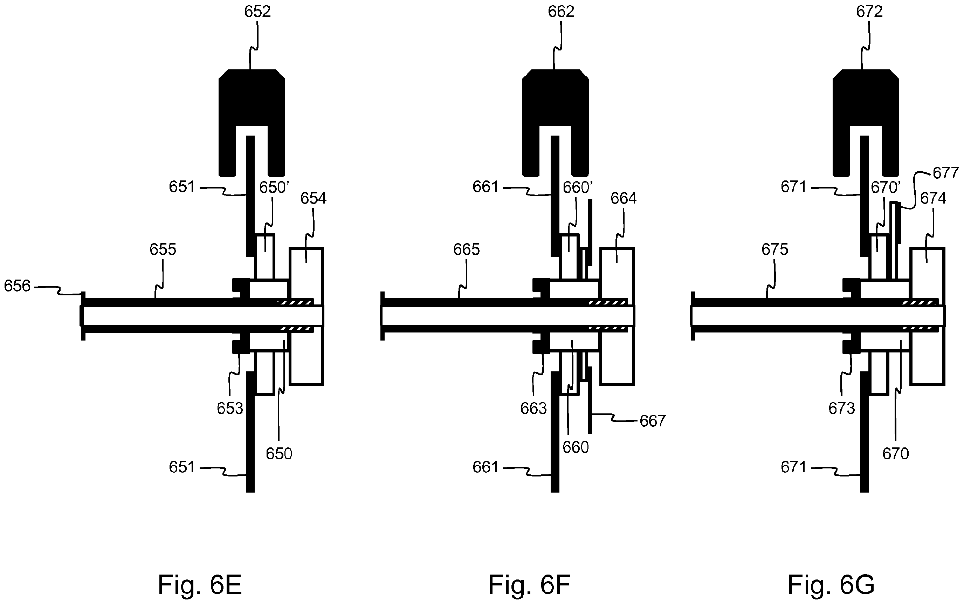

The first additional hub part drawn in Fig. 6E has a cylindrical housing 650 with internal cylindrical opening. In the cylindrical opening a first hub part support 655 is inserted. This first hub part support 655 is fixedly screwed into a fork leg 654 of the vehicle and has a retention element 656. The first hub part support 655 is dimensioned in length such that it also supports a main hub part that engages with the first additional hub part. The first additional hub part further has a flange 650' supporting the disc brake rotor 651 that is aligned within the disc brake calliper 652. Attached to the cylindrical housing 650 is a small diameter coupling part 653 that enables the first additional hub part to engage with a main hub part to form a 2-part hub system or even a 3-part hub system when the main hub part is further coupled to a second additional hub part.

The first additional hub part drawn in Fig. 6F has a cylindrical housing 660 with internal cylindrical opening. In the cylindrical opening a first hub part support 665 is inserted. This first hub part support 665 is fixedly screwed into a fork leg 664 of the vehicle and has a retention element. The first hub part support 665 is dimensioned in length such that it also supports a main hub part that engages with the first additional hub part. The first additional hub part further has a flange 660' supporting the disc brake rotor 661 that is aligned within the disc brake calliper 662, and a smaller flange supporting brake modulation system components 667. Attached to the cylindrical housing 660 is a small diameter coupling part 663 that enables the first additional hub part to engage with a main hub part to form a 2-part hub system or even a 3-part hub system when the main hub part is further coupled to a second additional hub part.

The first additional hub part drawn in Fig. 6G has a cylindrical housing 670 with internal cylindrical opening. In the cylindrical opening a first hub part support 675 is inserted. This first hub part support 675 is fixedly screwed into a fork leg 674 of the vehicle and has a retention element. The first hub part support 675 is dimensioned in length such that it also supports a main hub part that engages with the first additional hub part. The first additional hub part further has a flange 670' supporting the disc brake rotor 671 that is aligned within the disc brake calliper 672, and a smaller flange supporting speedometer components 677. Attached to the cylindrical housing 670 is a small diameter coupling part 673 that enables the first additional hub part to engage with a main hub part to form a 2-part hub system or even a 3-part hub system when the main hub part is further coupled to a second additional hub part.

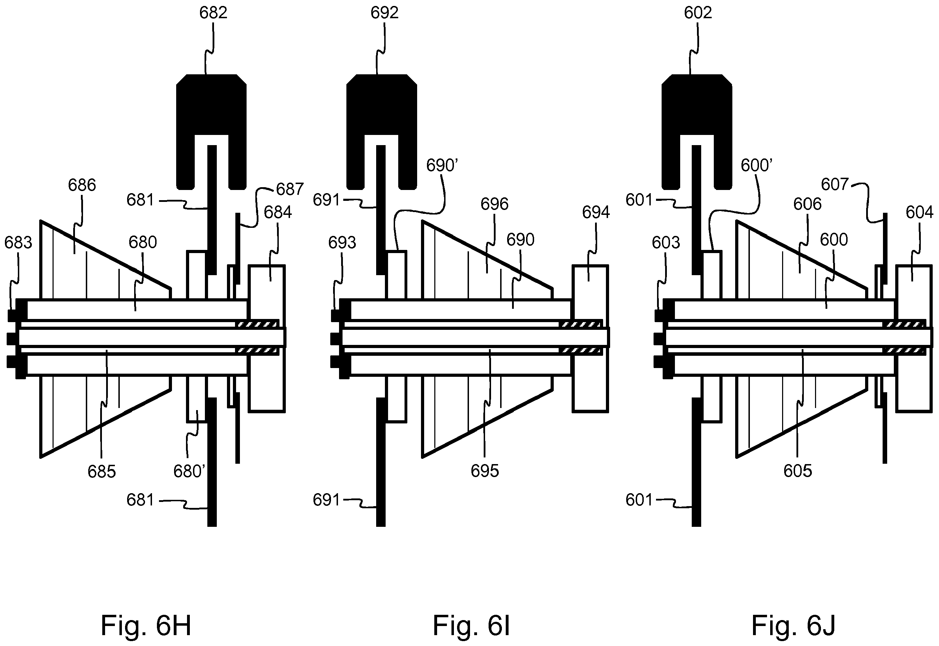

The first additional hub part drawn in Fig. 6H has a cylindrical housing 680 with internal cylindrical opening. In the cylindrical opening a first hub part support 685 is inserted. This first hub part support 685 is fixedly screwed into a fork leg 684 of the vehicle and has a retention element. The cylindrical housing 680 and first hub part support 685 are dimensioned in length such that they also support a drive train sprocket 686. The first additional hub part further has a flange 680' supporting the disc brake rotor 681 that is aligned within the disc brake calliper 682, and a smaller flange supporting brake modulation system components 687. Attached to the cylindrical housing 680 is a small diameter coupling part 683 that enables the first additional hub part to engage with a main hub part to form a 2-part hub system. The drive train sprocket 686 is positioned between the coupling part 683 and the flanges supporting respectively the disk brake rotor 681 and the brake modulation system components 687. This brings the advantage that the alignment of the disk brake rotor 681 and the disk brake calliper 682 which is typically mounted on the fork leg 684 becomes easier.

The first additional hub part drawn in Fig. 6I has a cylindrical housing 690 with internal cylindrical opening. In the cylindrical opening a first hub part support 695 is inserted. This first hub part support 695 is fixedly screwed into a fork leg 694 of the vehicle and has a retention element. The cylindrical housing 690 and first hub part support 695 are dimensioned in length such that they also support a drive train sprocket 696. The first additional hub part further has a flange 690' supporting the disc brake rotor 691 that is aligned within the disc brake calliper 692. Attached to the cylindrical housing 690 is a small diameter coupling part 693 that enables the first additional hub part to engage with a main hub part to form a 2-part hub system. The drive train sprocket 696 is positioned between flange 690' supporting the disk brake rotor 691 and the fork leg 694. The mounting of the disk brake calliper 692 on the fork leg 694 and the alignment of the disk brake rotor 691 with the disk brake calliper 692 may be more complex in this embodiment.

The first additional hub part drawn in Fig. 6J has a cylindrical housing 600 with internal cylindrical opening. In the cylindrical opening a first hub part support 605 is inserted. This first hub part support 605 is fixedly screwed into a fork leg 604 of the vehicle and has a retention element. The cylindrical housing 600 and first hub part support 605 are dimensioned in length such that they also support a drive train sprocket 606. The first additional hub part further has a flange 600' supporting the disc brake rotor 601 that is aligned within the disc brake calliper 602, and a smaller flange supporting brake modulation system components 607. Attached to the cylindrical housing 600 is a small diameter coupling part 603 that enables the first additional hub part to engage with a main hub part to form a 2-part hub system. The drive train sprocket 606 is positioned between flange 600' supporting the disk brake rotor 601 and the flange supporting the brake modulation system components 607 near the fork leg 604. The mounting of the disk brake calliper 602 on the fork leg 604 and the alignment of the disk brake rotor 601 with the disk brake calliper 602 may also in this embodiment be more complex.

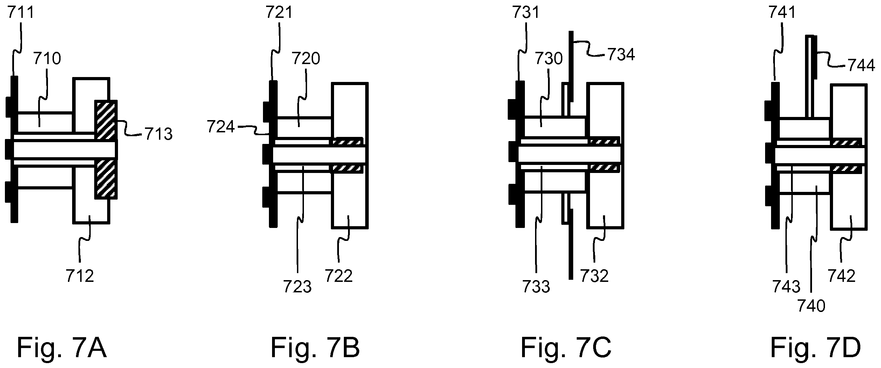

Fig. 7A - 7F illustrate variant implementations of the second additional hub part in different embodiments of a 3-part wheel hub system according to the present invention.

The second additional hub part drawn in Fig. 7A has a cylindrical housing 710 with internal cylindrical opening. In the cylindrical opening, a second hub part support 713 is inserted. This second hub part support 713 has external screw thread to be screwed into a fork leg 712 of the vehicle. Attached to the cylindrical housing 710 is a coupling part 711 that enables the second additional hub part to engage with a main hub part supporting wheel components and further engaging with a first additional hub part supporting at least a disk brake rotor. The second additional hub part drawn in Fig. 7A is useful in order to enable front wheels and rear wheels to be identical and consequently interchangeable.

The second additional hub part drawn in Fig. 7B has a cylindrical housing 720 with internal cylindrical opening. In the cylindrical opening, a second hub part support 723 is inserted. This second hub part support 723 at one end has external screw thread to be screwed into a fork leg 722 of the vehicle and at its opposite end has a retention element 724. Attached to the cylindrical housing 720 is a coupling part 721 that enables the second additional hub part to engage with a main hub part supporting wheel components and further engaging with a first additional hub part supporting at least a disk brake rotor. The second additional hub part drawn in Fig. 7B is also useful in order to enable front wheels and rear wheels to be identical and consequently interchangeable.

The second additional hub part drawn in Fig. 7C has a cylindrical housing 730 with internal cylindrical opening. In the cylindrical opening, a second hub part support 733 is inserted. This second hub part support 733 at one end has external screw thread to be screwed into a fork leg 732 of the vehicle and at its opposite end has a retention element. The second additional hub part further has a flange supporting brake modulation system components 734. Attached to the cylindrical housing 730 is a coupling part 731 that enables the second additional hub part to engage with a main hub part supporting wheel components and further engaging with a first additional hub part supporting at least a disk brake rotor.

The second additional hub part drawn in Fig. 7D has a cylindrical housing 740 with internal cylindrical opening. In the cylindrical opening, a second hub part support 743 is inserted. This second hub part support 743 at one end has external screw thread to be screwed into a fork leg 742 of the vehicle and at its opposite end has a retention element. The second additional hub part further has a flange supporting speedometer components 744. Attached to the cylindrical housing 740 is a coupling part 741 that enables the second additional hub part to engage with a main hub part supporting wheel components and further engaging with a first additional hub part supporting at least a disk brake rotor.

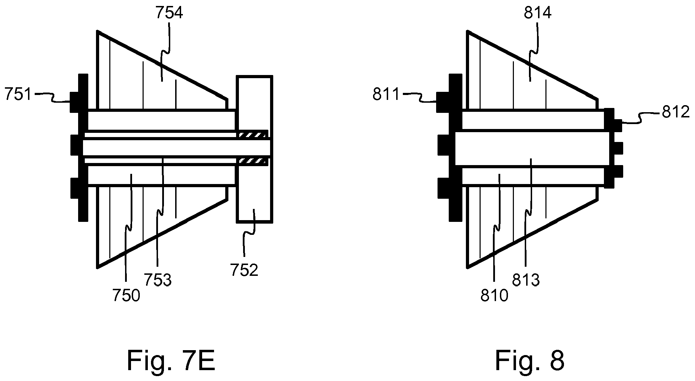

The second additional hub part drawn in Fig. 7E has a cylindrical housing 750 with internal cylindrical opening. In the cylindrical opening, a second hub part support 753 is inserted. This second hub part support 753 at one end has external screw thread to be screwed into a fork leg 752 of the vehicle and at its opposite end has a retention element. The cylindrical housing 750 and the second hub part support 753 are dimensioned in length to support a drive train sprocket 754. Attached to the cylindrical housing 750 is a coupling part 751 that enables the second additional hub part to engage with a main hub part supporting wheel components and further engaging with a first additional hub part supporting at least a disk brake rotor.

Fig. 8 shows a third additional hub part that may be placed in between the main hub part and the first additional hub part and therefore can be considered to form part the first coupling, i.e. the coupling between the main hub part and the first additional hub part. This is for instance the case when the wheel hub is constituted of four parts, for instance the hub part illustrated by Fig. 7A, mirrored and interlocked with the main hub part of Fig. 5A, interlocked with the third additional hub part of Fig. 8, interlocked with the second additional hub part of Fig. 6E. The third additional hub part drawn in Fig. 8 has a cylindrical housing 810 with internal cylindrical opening 813 wherein a hub part support can be inserted. The cylindrical housing 810 is dimensioned in length to support a drive train sprocket 814. Attached to the cylindrical housing 810 is a first coupling part 811 that enables the third additional hub part to engage with a main hub part supporting wheel components, for instance the main hub part of Fig. 5A. Attached to the cylindrical housing 810 is also a second coupling part 812 that enables the third additional hub part to engage with a first additional hub part supporting at least a disk brake rotor, for instance the first additional hub part of Fig. 6E.

It is noticed that the above described variants of the main hub part, first additional hub part and second additional hub part may be combined to constitute numerous variants of the wheel hub according to the present invention. Such wheel hub may consist of two hub parts, three hub parts or more than three hub parts. As an example, a four-part wheel hub according to the present invention may consist of a main hub part as depicted in Fig. 5A or Fig. 5B or Fig. 5C, a first additional hub part as depicted in Fig. 6E or Fig. 6F or Fig. 6G, a second additional hub part as depicted in Fig. 7A or Fig. 7B, and a third additional hub part as depicted in Fig. 8. One or several of the hub parts may have to be mirrored in order to become useful in the constituted wheel hub, for instance the second additional hub part of Fig. 7A or Fig. 7B in the above given example.

Although additional hub parts have been described here above that support drive train components, brake modulation system components, or speedometer components, the skilled person will appreciate that variant embodiments of the present invention can be contemplated with first, second or further additional hub parts that support a combination of these components or even other components like for instance dynamometer components.

It is further also remarked that whereas in the above description hub parts and coupling parts were considered separate components, the skilled person will appreciate that parts of a coupling, e.g. parts of a mechanical, frictional or magnetic coupling, can be integrated with a hub part in variant embodiments of the wheel hub according to the present invention.

Yet another remark is that a single hub part support may support plural hub parts in variant embodiments of the wheel hub according to the invention. The first hub part support may for instance be adapted in length to support also the third additional hub part. This way, the first hub part support may also retain the third additional hub part if the main hub part is removed.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A wheel hub for a vehicle comprising:
- a main hub part (101, 101', 101"; 201, 201', 201"; 301, 301', 301"; 401, 401', 401"; 510, 510', 510"; 520, 520', 520"; 530, 530', 530"; 540, 540', 540"; 550, 550', 550"; 560, 560', 560"; 570, 570', 570") adapted to support wheel components (110; 210; 310; 410; 511; 521; 531; 541; 551; 561; 571);
- a first additional hub part (102, 102'; 202, 202'; 302, 302'; 402, 402'; 610, 610'; 620, 620'; 630, 630'; 640, 640'; 650, 650'; 660, 660'; 670, 670'; 680, 680'; 690, 690'; 600, 600') adapted to support brake system components comprising a brake disc (120; 220; 320; 420; 611; 621; 631; 641; 651; 661; 671; 681; 691; 601);
- a first coupling (104, 104', 104"; 204', 204"; 304', 304"; 404', 404") between said main hub part and said first additional hub part adapted to engage said main hub part with said first additional hub part in an engaging position and to disengage said main hub part from said first additional hub part in a disengaging position;
- a first hub part support (106; 206; 306; 406; 615; 625; 635; 645; 655; 665; 675; 685; 695; 605) adapted to be fixed non-rotating to said vehicle and adapted to rotatably support said first additional hub part; and
- a through-axle (108; 208; 308; 408) with tensioning lever (183) adapted in said engaging position to maintain said main hub part and said first additional hub part in position jointly forming a synchronous rotating hub, and adapted in said disengaging position to release said main hub part from said first additional hub part thereby enabling to remove said main hub part without removal of said first additional hub part.

2. A wheel hub according to claim 1, wherein said first additional hub part (680, 680'; 690, 690'; 600, 600') is adapted to support drive train components (686; 696; 606).

3. A wheel hub according to claim 1 or claim 2, wherein said first additional hub part (630, 630'; 660, 660'; 680, 680'; 600, 600') is adapted to support brake modulation system components (637; 667; 687; 607).

4. A wheel hub according to claim 1 or claim 2 or claim 3, wherein said first additional hub part (640, 640'; 670, 670') is adapted to support speedometer components (647; 677).

5. A wheel hub according to one of the preceding claims, wherein said first hub part support (625; 635; 645; 655; 665; 675; 685; 695; 605) comprises a retention component (626; 656) to retain said first additional hub part in place when said main hub part is removed in said disengaging position.

6. A wheel hub according to one of the preceding claims, wherein said first hub part support is integrated with a vehicle frame or fork.

7. A wheel hub according to one of the preceding claims, further comprising:
- a second additional hub part (103; 403; 710; 720; 730; 740; 750);
- a second coupling (105, 105', 105"; 405', 405") between said main hub part and said second additional hub part adapted to engage said main hub part with said second additional hub part in said engaging position and to disengage said main hub part from said second additional hub part in said disengaging position; and
- a second hub part support (107; 713; 723; 733; 743; 753) adapted to be fixed non-rotating to said vehicle and adapted to rotatably support said second additional hub part; and wherein
- said through-axle (108; 408) with tensioning lever (183) is further adapted in said engaging position to maintain said main hub part with said first additional hub part and said second additional hub part in position jointly forming a synchronous rotating hub, and adapted in said disengaging position to release said main hub part from said first additional hub part and said second additional hub part thereby enabling to remove said main hub part without removal of said first additional hub part and without removal of said second additional hub part.

8. A wheel hub according to claim 7, wherein said second additional hub part (750) is adapted to support drive train components (754).

9. A wheel hub according to claim 7 or claim 8, wherein said second additional hub part (730) is adapted to support brake modulation system components (734).

10. A wheel hub according to claim 7 or claim 8 or claim 9, wherein said second additional hub part (740) is adapted to support speedometer components (744).

11. A wheel hub according to one of claims 7-10, wherein said second hub part support (107; 723; 733; 743; 753) comprises a retention component (173; 724) to retain said second additional hub part in place when said main hub part is removed in said disengaging position.

12. A wheel hub according to one of claims 7-10, wherein said second hub part support is integrated with a vehicle frame or fork.

13. A wheel hub according to one of claims 1-12, wherein said first coupling comprises a third additional hub part (810) in between said main hub part and said first additional hub part, said third additional hub part (810) being adapted to engage said main hub part with said first additional hub part in said engaging position and to disengage said main hub part from said first additional hub part in said disengaging position.
